(19) Europäisches Patentamt
European Patent Office
Office européen des brevets

(11) **EP 4 716 227 A1**

(12) **EUROPEAN PATENT APPLICATION**
published in accordance with Art. 153(4) EPC

(43) Date of publication:
**25.03.2026 Bulletin 2026/13**

(21) Application number: **24807290.2**

(22) Date of filing: **17.05.2024**

(51) International Patent Classification (IPC):
*H04N 23/63* (2023.01)   *B66C 13/00* (2006.01)
*B66C 23/90* (2006.01)   *H04N 7/18* (2006.01)

(52) Cooperative Patent Classification (CPC):
**B66C 13/00; B66C 23/90; H04N 7/18; H04N 23/63**

(86) International application number:
**PCT/JP2024/018385**

(87) International publication number:
**WO 2024/237340 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.05.2023 JP 2023082537**

(71) Applicant: **TADANO LTD.**
**Takamatsu-shi, Kagawa 761-0185 (JP)**

(72) Inventors:
• **MARUYAMA, Kazuaki**
  **Takamatsu-shi, Kagawa 761-0185 (JP)**
• **TANIZUMI, Kazuya**
  **Takamatsu-shi, Kagawa 761-0185 (JP)**
• **HAYASHI, Hiroyuki**
  **Takamatsu-shi, Kagawa 761-0185 (JP)**

(74) Representative: **MFG Patentanwälte
Meyer-Wildhagen Meggle-Freund
Gerhard PartG mbB
Amalienstraße 62
80799 München (DE)**

(54) **OPTICAL AXIS DEVIATION ANGLE CORRECTION DEVICE, CRANE, AND OPTICAL AXIS DEVIATION ANGLE CORRECTION METHOD**

(57)    An optical axis deviation angle correction device includes: a camera that has a lens and captures an image including a target whose position is known; and a controller that draws a mark indicating a position of an optical axis of the lens on a captured image of the camera, calculates a deviation angle of an optical axis of the lens with respect to an imaging direction of the camera based on a positional relationship between the mark and the target in the captured image, and corrects a position of the mark in a manner that the mark in the captured image overlaps with the target based on the deviation angle of the optical axis.

*FIG. 11*

## Description

Technical Field

The present invention relates to an optical axis deviation angle correction device, a crane, and an optical axis deviation angle correction method.

Background Art

Conventionally, as disclosed in Patent Literature 1, when a center of a captured image which is captured by a camera and an optical axis of a lens are deviated from each other, for example, a subject located at the center of the captured image at the telephoto end of the camera may appear at a position deviated from the center of the captured image at the wide-angle end of the camera.

In the case of an imaging device described in Patent Literature 1 as mentioned above, a deviation amount between the center of the captured image and the optical axis of the lens is stored in a storage unit, and the deviation of the optical axis of the lens is corrected by mechanically adjusting an angle of a tripod head that supports the camera using the stored deviation amount. As a result, the subject is positioned at the center of the captured image regardless of the magnification at which the image is captured.

Citation List

Patent Literature

Patent Literature 1: JP 2008-311804 A

Summary of the Invention

Problems to be Solved by the Invention

As described above, in a case where the deviation of the optical axis of the lens is corrected by mechanically adjusting the angle of the tripod head that supports the camera, in addition to a controller that performs the imaging operation of the camera, the processing of the captured image, etc., it is necessary to provide a motor for adjusting the angle of the tripod head, a motor driver for controlling the motor, etc. Consequently, the imaging device is complicated and expensive.

Accordingly, the present invention provides an optical axis deviation angle correction device, a crane, and an optical axis deviation angle correction method, which make it possible to correct an optical axis deviation angle of a lens in a camera with a simple and inexpensive configuration.

Solution to Problem

One aspect of the optical axis deviation angle correction device according to the present invention includes: a camera that has a lens and captures an image including a target whose position is known; and a controller that draws a mark indicating a position of an optical axis of the lens on a captured image of the camera, calculates a deviation angle of an optical axis of the lens with respect to an imaging direction of the camera based on a positional relationship between the mark and the target in the captured image, and corrects a position of the mark in a manner that the mark in the captured image overlaps with the target based on the deviation angle of the optical axis.

One aspect of the crane according to the present invention includes the above-described optical axis deviation angle correction device.

One aspect of the optical axis deviation angle correction method according to the present invention includes:

capturing an image including a target whose position is known by a camera having a lens;
drawing a mark indicating a position of an optical axis of the lens on a captured image of the camera;
calculating a deviation angle of an optical axis of the lens with respect to an imaging direction of the camera based on a positional relationship between the mark and the target in the captured image; and
correcting a position of the mark in a manner that the mark in the captured image overlaps with the target based on the deviation angle of the optical axis.

Effects of the Invention

According to the present invention, it is possible to correct an optical axis deviation angle of a lens in a camera with a simple and inexpensive configuration.

Brief Description of Drawings

Fig. 1 is a side view illustrating a crane.
Fig. 2 is a plan view illustrating an interior of a cabin.
Fig. 3 is a block diagram illustrating a configuration of an operating system.
Fig. 4 is a diagram illustrating a captured image which is captured by a camera.
Fig. 5 is a diagram illustrating the camera attached to a boom.
Fig. 6 is a diagram illustrating a configuration of the camera.
Fig. 7A is a diagram illustrating an optical axis deviation angle of a lens in a pan direction.
Fig. 7B is a diagram illustrating the optical axis deviation angle of the lens in a tilt direction.
Fig. 8 is a diagram illustrating a switch operating device.
Fig. 9 is a diagram illustrating a captured image including a contact point of a hook.

Fig. 10 is a diagram illustrating a captured image of a state in which a target plate is placed at the contact point of the hook and the hook is raised until the target plate appears in the captured image.

Fig. 11 is a diagram illustrating a captured image in a first optical axis deviation amount measurement mode, in which an image including the target plate is captured and a center of a danger zone circle is drawn.

Fig. 12 is a diagram illustrating a captured image in a second optical axis deviation amount measurement mode, in which an image including the target plate is captured and a center of a danger zone circle is drawn.

Fig. 13 is a diagram illustrating a captured image in a third optical axis deviation amount measurement mode, in which an image including the target plate is captured and a center of a danger zone circle is drawn.

Fig. 14 is a diagram illustrating a captured image in which the danger zone circle is drawn after correcting the optical axis deviation angle.

Fig. 15 is a diagram illustrating a captured image in which the danger zone circle and a performance line are drawn after termination of an optical axis deviation angle correction mode.

Description of Embodiments

Next, embodiments for carrying out the present invention will be described with reference to the accompanying drawings.

[Crane]

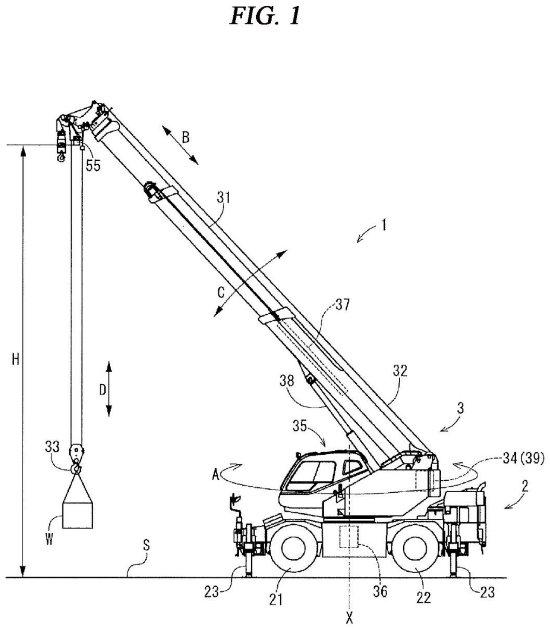

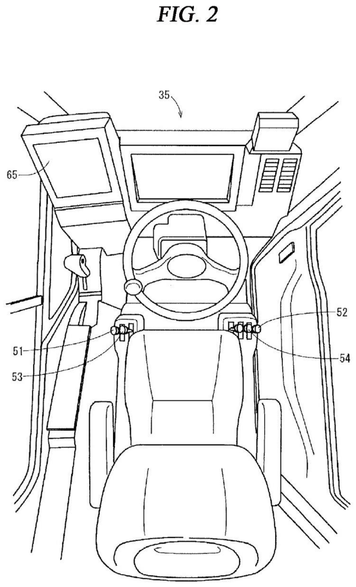

A crane 1 illustrated in Figs. 1 and 2 is one embodiment of a crane including an optical axis deviation angle correction device according to the present invention. The crane 1 includes a traveling body 2 and a slewing body 3. The slewing body 3 is one example of a vehicle body.

The traveling body 2 includes a pair of front wheels 21 on the left and right sides and a pair of rear wheels 22 on the left and right sides. The traveling body 2 also includes an outrigger 23 that is grounded to ensure stability when performing transport operations of a cargo W. The traveling body 2 supports the slewing body 3 in a manner that the slewing body 3 is capable of slewing in the horizontal direction. The slewing body 3 is slewed about a slewing center X by an actuator provided in the traveling body 2.

The slewing body 3 has a boom 31. The boom 31 is supported at a rear portion of the slewing body 3. The boom 31 supported by the slewing body 3 extends in a manner of projecting forward from the rear portion of the slewing body 3. The boom 31 is capable of slewing in a slewing direction A together with the slewing body 3 by means of an actuator (see arrow A in Fig. 1). The boom 31 is capable of telescoping in a telescopic direction B by means of an actuator (see arrow B in Fig. 1). The boom 31 is capable of luffing in a luffing direction C by means of an actuator (see arrow C in Fig. 1).

A wire rope 32 is reeved over the boom 31. A hook 33 is attached to the wire rope 32 that hangs down from a tip portion of the boom 31. A winch 34 is disposed in the vicinity of the base end side of the boom 31. The winch 34 is integrally configured with an actuator and winds in or winds out the wire rope 32. Accordingly, the hook 33 is capable of moving up and down in an elevating direction D by means of the actuator (see arrow D in Fig. 1).

The slewing body 3 includes a cabin 35 on the side of the boom 31. Inside the cabin 35, a slewing lever 51, a telescopic lever 52, a luffing lever 53, a winding lever 54, and the like are provided.

[Operating System]

The crane 1 includes an operating system 4.

As illustrated in Figs. 1 to 3, the operating system 4 mainly includes a controller 40, a receiver 43, various levers 51 to 54, a camera 55, a switch operating device 58, various valves 61 to 64, a display 65, and various detection sensors 91 to 96.

The controller 40 has an information storage unit 41. The information storage unit 41 stores various programs necessary for controlling the crane 1. The information storage unit 41 also stores various data.

The controller 40 has an information processing unit 42. The information processing unit 42 converts the operation amounts of the various levers 51 to 54 into electric signals and transmits the converted electric signals to the various valves 61 to 64 that operate the actuator. Accordingly, the controller 40 implements the operation of the boom 31 (slewing operation, telescopic operation, and luffing operation) and the operation of the winch 34 (winding-in operation and winding-out operation).

More specifically, the boom 31 is capable of slewing in the slewing direction A by means of the actuator (see arrow A in Fig. 1). In the present embodiment, the actuator for slewing the boom 31 is a slewing motor 36 (see Fig. 1). The slewing motor 36 is appropriately operated by a slewing valve 61, which is a directional control valve. The slewing valve 61 is operated based on instructions of the controller 40. The slewing angle of the boom 31 is detected by a slewing angle detection sensor 91.

The boom 31 is capable of telescoping in the telescopic direction B by means of the actuator (see arrow B in Fig. 1). In the present embodiment, the actuator for telescoping the boom 31 is a telescopic cylinder 37 (see Fig. 1). The telescopic cylinder 37 is appropriately operated by a telescopic valve 62, which is a directional control valve. The telescopic valve 62 is operated based on instructions of the controller 40. The telescopic length of the boom 31 is detected by a boom length detection sensor 92.

The boom 31 is capable of luffing in the luffing direction C by means of the actuator (see arrow C in Fig. 1). In the present embodiment, the actuator for luffing the boom 31 is a luffing cylinder 38 (see Fig. 1). The luffing cylinder 38 is appropriately operated by a luffing valve 63, which is a directional control valve. The luffing valve 63 is operated based on instructions of the controller 40. The luffing angle of the boom 31 is detected by a boom angle detection sensor 93.

The hook 33 is capable of moving up and down in the elevating direction D by means of the actuator (see arrow D in Fig. 1). In the present embodiment, the actuator for moving the hook 33 up and down is a winding motor 39 (see Fig. 1). The winding motor 39 is appropriately operated by a winding valve 64, which is a directional control valve. The winding valve 64 is operated based on instructions of the controller 40. The suspended length of the hook 33 is detected by a sensor which is not illustrated.

A luffing cylinder pressure detection sensor 94 provided in the operating system 4 detects the pressure applied to the luffing cylinder 38. A lever operation detection sensor 95 detects the operation states of the various levers 51 to 54. An outrigger extension width detection sensor 96 detects the extension width of the outrigger 23.

The operating system 4 includes an overload prevention device 45. The overload prevention device 45 is a safety device that suppresses excessive working moment acting on the crane 1 and thereby prevents in advance overturning or damage of the crane 1 due to an overload exceeding a rated load.

The overload prevention device 45 receives inputs of an operating state of the crane 1 registered by an operator, as well as a slewing angle of the boom 31, a telescoping length of the boom 31, a luffing angle of the boom 31, a pressure applied to the luffing cylinder 38, operating states of the various levers 51 to 54, an extension width of the outrigger 23, etc. which are detected by the various detection sensors 91 to 96. The overload prevention device 45 calculates a working moment and a rated moment based on the inputs. The overload prevention device 45 then obtains a moment load factor through dividing the working moment by the rated moment. The obtained moment load factor is input from the overload prevention device 45 to the controller 40. The obtained moment load factor may also be displayed on the display 65.

When the input moment load factor is 100% or more, the controller 40 stops the operation of the crane 1 toward a dangerous side, and issues an alarm by display of an error code on the display 65, sounding from a buzzer, lighting of an indicator lamp, etc.

It should be noted that when the moment load factor is 100% or more, the operation of the crane 1 toward the dangerous side is stopped, but the operation toward a safe side is permitted.

As overload control based on the moment load factor input from the overload prevention device 45, the controller 40, for example, when the moment load factor is 100% or more, performs control to stop the operation of the crane 1 toward the dangerous side and to issue an alarm. Further, as overload control, when the moment load factor is 90% or more and less than 100%, the controller 40 issues an alarm to call attention. Furthermore, as overload control, when the moment load factor is less than 90%, the controller 40 performs control to indicate safety.

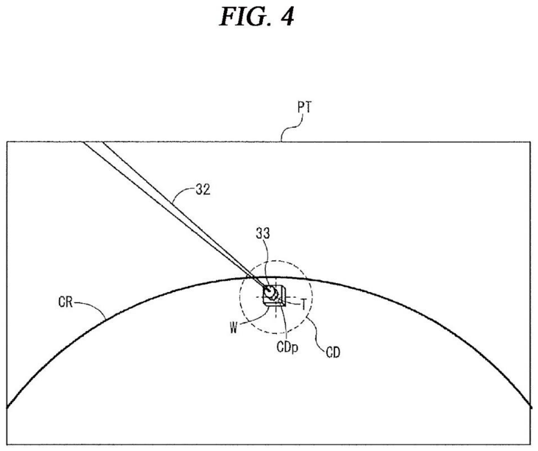

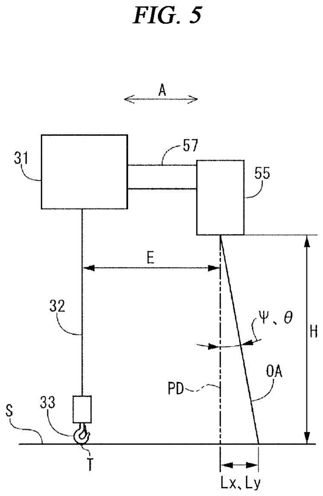

As illustrated in Fig. 1, the camera 55 is attached to the tip portion of the boom 31. As in the captured image PT illustrated in Fig. 4, the camera 55 is capable of capturing a construction site from above, and is capable of capturing the hook 33 suspended from the tip of the boom 31 and the cargo W suspended from the hook 33. The camera 55 is attached to the boom 31 in a posture in which an imaging direction PD (see Fig. 5) is vertically downward. The camera 55 incorporates an inclination angle detector 56, and the inclination angle detector 56 is capable of detecting the inclination angle of the camera 55 with respect to the vertical downward direction.

The controller 40 includes the receiver 43. The camera 55 is wirelessly connected to the controller 40 via the receiver 43. However, the camera 55 may also be connected to the controller 40 by wire. The controller 40 is capable of acquiring the captured image PT including the hook 33 and the cargo W suspended from the hook 33, which have been captured by the camera 55.

The display 65 is for displaying various images. The display 65 is attached in front of a driver's seat inside the cabin 35 so that the operator can visually recognize it while operating the various levers 51 to 54 (see Fig. 2). The display 65 is connected to the controller 40 via the receiver 43. The controller 40 can provide information to the operator through the display 65. Specifically, the controller 40 can cause the captured image PT, including the hook 33 and the cargo W suspended from the hook 33, which have been captured by the camera 55, to be displayed on the display 65.

As illustrated in Fig. 5, the camera 55 is attached to the boom 31 by a mounting member 57. The camera 55 is positioned at a distance E from the wire rope 32 suspended from the boom 31 in the slewing direction A.

The camera 55 is attached to the boom 31 in a posture in which the imaging direction PD is vertically downward. The extending direction of the wire rope 32 suspended from the boom 31 and the imaging direction PD of the camera 55 are parallel to each other. The mounting member 57 may be, for example, a rotary damper.

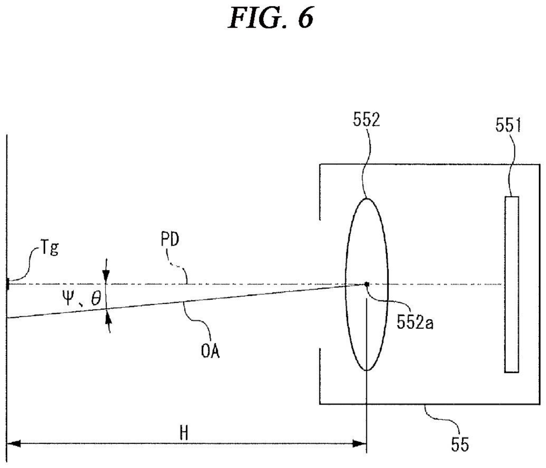

As illustrated in Fig. 6, the camera 55 includes an image sensor 551 and a lens 552. The lens 552 adjusts a capturing magnification of an image to be captured by the camera 55. The image sensor 551 captures the image whose capturing magnification has been adjusted by the lens 552. The imaging direction PD of the camera 55 is a direction orthogonal to the imaging surface of the image sensor 551. The camera 55 is capable of taking an image including a target Tg whose positional relationship with respect to the camera 55 is known. In this case, the camera 55 can capture an image in a state in which the target Tg is positioned on the extension line in the imaging direction PD of the camera 55.

In the camera 55, the lens 552 is assembled in a manner that the axial direction of an optical axis OA of the lens 552 coincides with the imaging direction PD. However, due to influences such as assembly errors, the optical axis OA of the lens 552 after assembly may be deviated with respect to the imaging direction PD. That is, the optical axis OA may have optical axis deviation angles $\Psi$, $\theta$ with respect to the imaging direction PD.

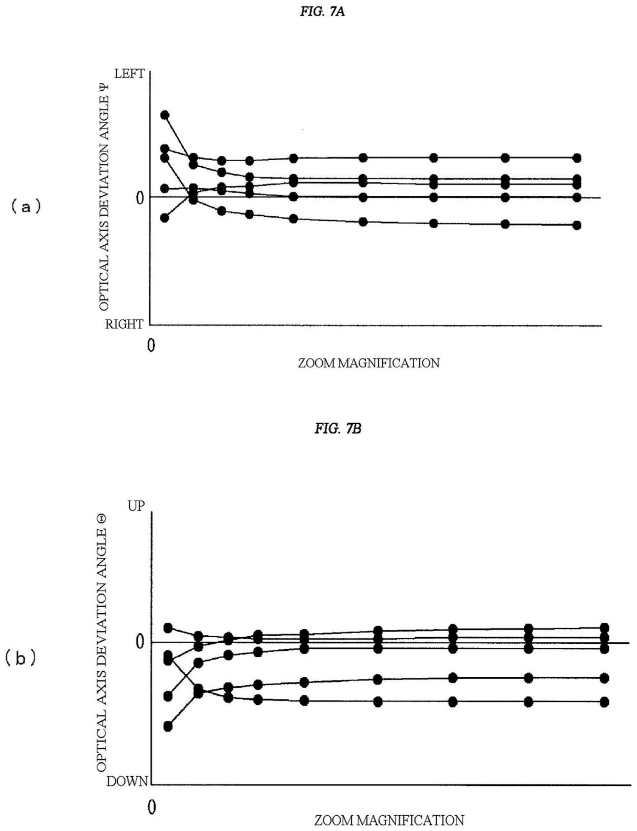

For example, it is found that when the optical axis deviation angles $\Psi$, $\theta$ are measured for a plurality of cameras 55, the cameras 55 have the optical axis deviation angle $\Psi$ in a pan direction as illustrated in Fig. 7A, and the optical axis deviation angle $\theta$ in a tilt direction as illustrated in Fig. 7B. In Fig. 7A, the horizontal axis represents the zoom magnification, which is the capturing magnification of an image captured by the camera 55, and the vertical axis represents the optical axis deviation angle $\Psi$. In Fig. 7B, the horizontal axis represents the zoom magnification, and the vertical axis represents the optical axis deviation angle $\theta$. It should be noted that the pan direction is the left-right direction in the captured image PT as illustrated in Fig. 4, and the tilt direction is the up-down direction in the captured image PT as illustrated in Fig. 4.

As illustrated in Figs. 5 and 6, when the camera 55 has the optical axis deviation angle $\Psi$, the deviation amount of the optical axis OA with respect to the imaging direction PD in the pan direction, at a position separated by a distance H from a center 552a of the lens 552 in the imaging direction PD of the camera 55, is a first optical axis deviation amount Lx. Further, when the camera 55 has the optical axis deviation angle $\theta$, the deviation amount of the optical axis OA with respect to the imaging direction PD in the tilt direction, at the position separated by the distance H from the center 552a of the lens 552 in the imaging direction PD of the camera 55, is a second optical axis deviation amount Ly.

In the crane 1, when the controller 40 displays the captured image PT captured by the camera 55 on the display 65, the controller 40 can draw a danger zone circle CD (see Fig. 4) and a performance line CR superimposed on the captured image PT.

The danger zone circle CD is a drawing indicating a circular region centered on a contact point T of the hook 33 attached to the wire rope 32 suspended from the boom 31 or the cargo W suspended from the hook 33 with respect to a ground S. The danger zone circle CD indicates a region where the cargo W suspended from the hook 33 may fall. Therefore, by drawing the danger zone circle CD on the captured image PT, it is possible to provide a warning for prohibiting entry of a person into the danger zone circle CD. It should be noted that the danger zone circle CD is drawn at a position where a center CDp of the danger zone circle CD coincides with the optical axis OA of the camera 55.

The performance line CR is a circle centered on the slewing center X and indicates the moment load factor calculated by the overload prevention device 45. For example, the boundary at which the moment load factor of the crane 1 is 90% can be indicated by the performance line CR. In this case, the inner region surrounded by the performance line CR indicates a region where the moment load ratio is 90% or less.

The controller 40 can display the captured image PT in a manner that the contact point T of the hook 33 is positioned on the extension line in the imaging direction PD of the camera 55. That is, since the camera 55 is positioned at a distance E away from the wire rope 32 in the slewing direction A, the controller 40 can display the contact point T in the captured image PT at a position corresponding to the position when the contact point T is captured from directly above the wire rope 32, by correcting the position of the contact point T of the hook 33 appearing in the captured image PT by a dimension corresponding to the distance E.

In this way, in a case where the danger zone circle CD is drawn on the captured image PT in which the contact point T of the hook 33 attached to the wire rope 32 is displayed in a manner of being positioned on the extension line in the imaging direction PD of the camera 55, when the imaging direction PD of the camera 55 coincides with the axial direction of the optical axis OA, the position of the contact point T of the hook 33 with the ground S coincides with the position of the center CDp of the danger zone circle CD.

However, when the optical axis OA has the optical axis deviation angles $\Psi$, $\theta$ with respect to the imaging direction PD, the position of the center CDp of the drawn danger zone circle CD and the position of the contact point T are displayed in a deviated manner. When the position of the center CDp of the danger zone circle CD and the position of the contact point T are displayed in a deviated manner, the function of the danger zone circle CD for providing a warning is reduced, and therefore it is preferable that no deviation occurs between the position of the center CDp of the danger zone circle CD and the position of the contact point T.

[Optical axis deviation angle correction device]

Therefore, in the crane 1, an optical axis deviation angle correction device 7 for correcting the optical axis deviation angles $\Psi$, $\theta$ of the lens 552 in the camera 55 is provided, and the optical axis deviation angles $\Psi$, $\theta$ of the lens 552 are corrected by the optical axis deviation angle correction device 7 so that the position of the contact point T and the position of the center CDp of the danger zone circle CD drawn on the captured image PT coincide with each other.

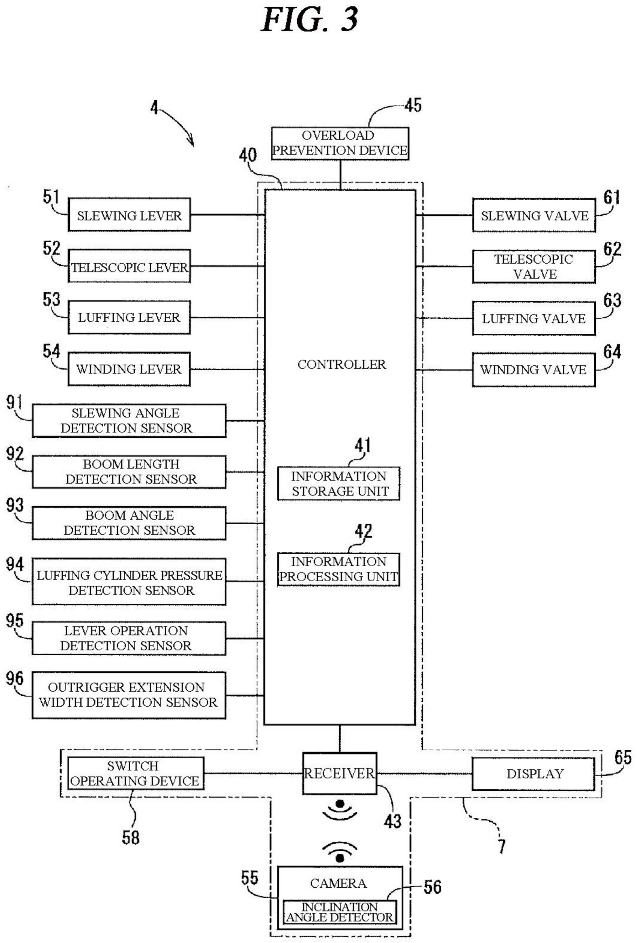

As illustrated in Fig. 3, the optical axis deviation angle correction device 7 includes the controller 40, the camera 55, the display 65, the receiver 43, the switch operating device 58, etc.

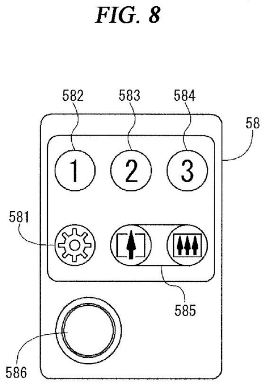

As illustrated in Fig. 8, the switch operating device 58 is connected to the controller 40 via the receiver 43. The switch operating device 58 has a setting button 581, a first preset button 582, a second preset button 583, a third preset button 584, a zoom button 585, and a joystick 586.

Hereinafter, a method of correcting the optical axis deviation angles $\Psi$, $\theta$ of the lens 552 by the optical axis deviation angle correction device 7 will be described.

When correcting the optical axis deviation angles $\Psi$, $\theta$, the controller 40 adjusts the telescopic length and the luffing angle of the boom 31 so that the height position H of the camera 55 from the ground S is a predetermined height position set in advance, and also adjusts the suspended length of the hook 33 to a length at which the hook 33 contacts the ground S.

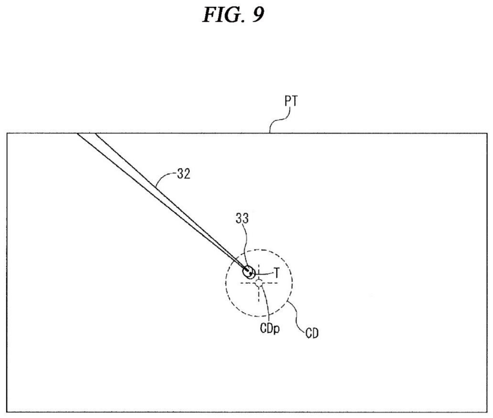

As illustrated in Fig. 9, in a state where the hook 33 is in contact with the ground S, the controller 40 captures an image including the contact point T of the hook 33 by the camera 55. In this case, the controller 40 draws the danger zone circle CD on the captured image PT which has been captured.

The operator places a target plate TPL on the contact point T of the hook 33. The target plate TPL is a plate indicating the three-dimensional position of the contact point T of the hook 33 and is a target captured by the camera 55.

In the information storage unit 41 of the controller 40, the mounting position of the camera 55 with respect to the boom 31 is stored. Further, the controller 40 is capable of grasping the three-dimensional position of the hook 33 with respect to the camera 55, and the grasped three-dimensional position of the hook 33 with respect to the camera 55 can be stored in the information storage unit 41.

The controller 40 grasps the three-dimensional position of the target plate TPL positioned at the contact point T with respect to the camera 55, based on the mounting position of the camera 55 with respect to the boom 31, the telescopic length of the boom 31 detected by the boom length detection sensor 92, the luffing angle of the boom 31 detected by the boom angle detection sensor 93, the suspended length of the hook 33 detected by the sensor which is not illustrated, etc. The controller 40 can store the grasped three-dimensional position of the target plate TPL with respect to the camera 55.

The target plate TPL, whose three-dimensional position with respect to the camera 55 has been grasped by the controller 40, is disposed apart from the camera and is a target whose positional relationship with respect to the camera is known. The positional relationship of the target plate TPL with respect to the camera 55 corresponds to the positional relationship of the hook 33 with respect to the camera 55.

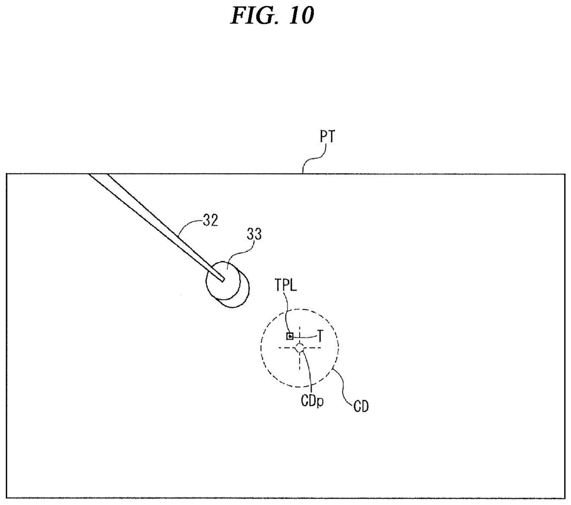

As illustrated in Fig. 10, the controller 40 controls the winding valve 64 to raise the grounded hook 33 by the winding motor 39. In this case, the controller 40 raises the hook 33 until the target plate TPL placed on the ground S appears at a height captured in the captured image PT.

The operator presses the setting button 581 of the switch operating device 58 to switch the controller 40 to an optical axis deviation angle correction mode. The operator then presses the first preset button 582. When the first preset button 582 is pressed, the controller 40 shifts to a first optical axis deviation amount measurement mode. However, after switching to the optical axis deviation angle correction mode, the controller 40 may also automatically shift to the first optical axis deviation amount measurement mode.

In the first optical axis deviation amount measurement mode, the controller 40 sets a capturing magnification $zi$ of the image in the camera 55 to a predetermined capturing magnification set in advance, and captures an image including the target plate TPL by the camera 55. In this case, the capturing magnification $zi$ set in the first optical axis deviation amount measurement mode is set to a capturing magnification $z1$. Further, the captured image PT captured in the first optical axis deviation amount measurement mode is a captured image PT1. The controller 40 can display the capturing magnification $z1$ of the image at the time when the captured image PT1 is captured on the captured image PT1.

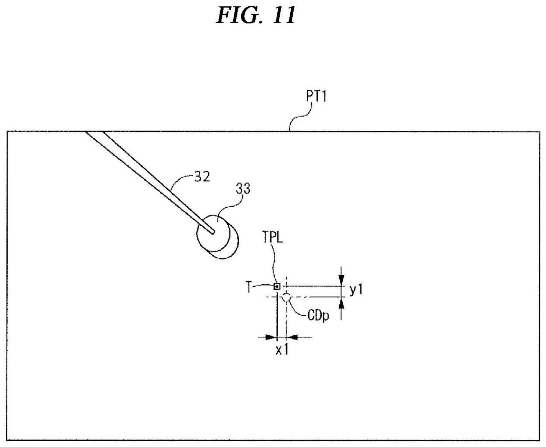

As illustrated in Fig. 11, the controller 40 draws the center CDp of the danger zone circle CD on the captured image PT1. The center CDp of the danger zone circle CD drawn on the captured image PT1 is a mark indicating the position of the optical axis OA of the lens 552 in the captured image PT1. That is, the danger zone circle CD is drawn at a position where the center CDp of the danger zone circle CD coincides with the position of the optical axis OA of the lens 552. It should be noted that, in the captured image PT1, only the center CDp is drawn without drawing the danger zone circle CD itself, but it is also possible to draw the danger zone circle CD in addition to the center CDp.

In the captured image PT1, the position of the target plate TPL and the position of the center CDp are deviated from each other. The positional deviation amount in the left-right direction between the position of the target plate TPL and the position of the center CDp in the captured image PT1 is a first positional deviation amount $x1$, and the positional deviation amount in the up-down direction between the position of the target plate TPL and the position of the center CDp in the captured image PT1 is a second positional deviation amount $y1$. It should be noted that the left-right direction, which is the pan direction of the camera 55, is an example of a first direction, and the up-down direction, which is the tilt direction of the camera 55, is an example of a second direction.

The center CDp drawn on the captured image PT1 can be moved by operating the joystick 586 of the switch operating device 58. The operator operates the joystick 586 to move the center CDp to the position of the target plate TPL, and after making the position of the center CDp coincide with the position of the target plate TPL, presses the joystick 586.

By moving the center CDp to coincide with the position of the target plate TPL through the operation of the joystick 586 and pressing the joystick 586, the first positional deviation amount x1 and the second positional deviation amount y1 on the captured image PT1 are measured and input to the controller 40. The first positional deviation amount x1 and the second positional deviation amount y1 correspond to an example of the positional relationship between a mark and a target in the captured image PT1.

However, the switch operating device 58 may be configured to include a cross key instead of the joystick 586, and the first positional deviation amount x1 and the second positional deviation amount y1 may also be input to the controller 40 by moving the center CDp through operation of the cross key. Further, the display 65 for displaying the captured image PT1 may be configured as a touch panel display, and the first positional deviation amount x1 and the second positional deviation amount y1 may also be input to the controller 40 by directly touching and moving a movement target such as the center CDp on the display 65. Furthermore, the first positional deviation amount x1 and the second positional deviation amount y1 may also be automatically acquired by the information processing unit 42 when the controller 40 draws the center CDp, and input to the information storage unit 41. The first deviation amount x1 and the second deviation amount y1 input to the controller 40 can be displayed on the captured image PT1.

When the center CDp is moved to the position of the target plate TPL by operating the joystick 586, in a case where, for example, the target plate TPL is small and difficult to visually recognize, it is possible to change the display magnification of the captured image PT1 by digital zoom through operating the zoom button 585 of the switch operating device 58, for example.

The controller 40 calculates an optical axis deviation angle $\Psi_1$ of the lens 552 in the camera 55 based on the input first deviation amount x1 and the positional relationship between the camera 55 and the target plate TPL. That is, the controller 40 calculates the deviation angle of the optical axis of the lens with respect to the imaging direction of the camera based on the positional relationship between the mark and the target in the captured image PT1.

Specifically, based on the first positional deviation amount x1 in the left-right direction between the target plate TPL and the center CDp of the danger zone circle CD on the captured image PT1 when the captured image PT1 is displayed in a manner that the target plate TPL is positioned on the extension line in the imaging direction PD of the camera 55, a first optical axis deviation amount Lx1 of the lens 552 with respect to the target plate TPL in the left-right direction, at a position separated from the camera 55 by the distance H from the center 552a of the lens 552 to the contact point T on which the target plate TPL is placed in the imaging direction PD of the camera 55, is calculated. Furthermore, by using the first optical axis deviation amount Lx1 and the distance H, the first optical axis deviation angle $\Psi_1$ of the lens 552 in the left-right direction is calculated by formula (1).

[Formula 1]

$$\Psi i = \tan^{-1} \frac{Lxi}{H} \quad \cdots \quad (1)$$

It should be noted that in formula (1), i is a natural number, and when the first optical axis deviation angle $\Psi_1$ is calculated, i = 1 is satisfied.

Further, the controller 40 calculates an optical axis deviation angle $\theta_1$ of the lens 552 in the camera 55 based on the input second deviation amount y1 and the positional relationship between the camera 55 and the target plate TPL.

Specifically, based on the second positional deviation amount y1 in the up-down direction between the target plate TPL and the center CDp of the danger zone circle CD on the captured image PT1 when the captured image PT1 is displayed in a manner that the target plate TPL is positioned on the extension line in the imaging direction PD of the camera 55, a second optical axis deviation amount Ly1 of the lens 552 with respect to the target plate TPL in the up-down direction, at a position separated from the camera 55 by the distance H from the center 552a of the lens 552 to the contact point T on which the target plate TPL is placed in the imaging direction PD of the camera 55, is calculated. Furthermore, by using the second optical axis deviation amount Ly1 and the distance H, the second optical axis deviation angle $\theta_1$ of the lens 552 in the up-down direction is calculated by formula (2).

[Formula 2]

$$\theta i = \tan^{-1} \frac{Lyi}{H} \quad \cdots \quad (2)$$

It should be noted that in formula (2), i is a natural number, and when the second optical axis deviation angle $\theta_1$ is calculated, i = 1 is satisfied.

In the first optical axis deviation amount measurement mode, the operator operates the joystick 586 to move the center CDp to coincide with the position of the target plate TPL, and after pressing the joystick 586, presses the second preset button 583 of the switch operating device 58. When the second preset button 583 is pressed, the controller 40 shifts to a second optical axis deviation amount measurement mode. However, after the input of the first positional deviation amount x1 and the second positional deviation amount y1 to the controller 40 in the first optical axis deviation amount measurement mode has been completed, the controller 40 may also automatically shift to the second optical axis deviation amount measurement mode.

In the second optical axis deviation amount measurement mode, the controller 40 sets the capturing magnification zi of the image in the camera 55 to a predetermined capturing magnification set in advance, and captures an image including the target plate TPL by the camera 55. In this case, the capturing magnification zi set in the second optical axis deviation amount measurement mode is set to a capturing magnification z2, which is different from the capturing magnification z1. In the present embodiment, the capturing magnification z2 is set to a magnification larger than the capturing magnification z1. Further, the captured image PT captured in the second optical axis deviation amount measurement mode is a captured image PT2. The controller 40 can display, on the captured image PT2, the capturing magnification z2 of the image at the time when the captured image PT2 is captured.

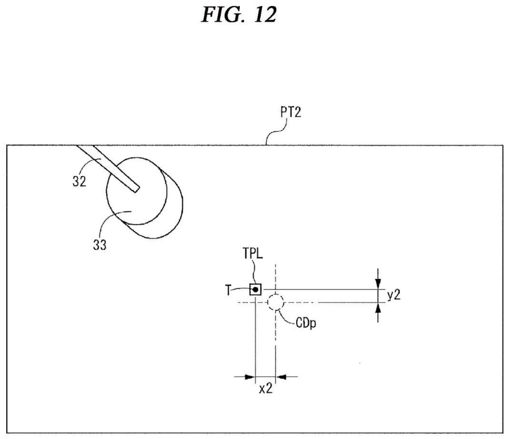

As illustrated in Fig. 12, the controller 40 draws the center CDp of the danger zone circle CD on the captured image PT2. The center CDp of the danger zone circle CD drawn on the captured image PT2 is a mark indicating the position of the optical axis OA of the lens 552 in the captured image PT2. It should be noted that, in the captured image PT2, only the center CDp is drawn without drawing the danger zone circle CD itself, but it is also possible to draw the danger zone circle CD in addition to the center CDp.

In the captured image PT2, the position of the target plate TPL and the position of the center CDp are deviated from each other. The positional deviation amount in the left-right direction between the position of the target plate TPL and the position of the center CDp in the captured image PT2 is a first positional deviation amount x2, and the positional deviation amount in the up-down direction between the position of the target plate TPL and the position of the center CDp in the captured image PT2 is a second positional deviation amount y2.

The center CDp drawn on the captured image PT2 can be moved by operating the joystick 586 of the switch operating device 58. The operator operates the joystick 586 to move the center CDp to the target plate TPL, and after making the position of the center CDp coincide with the position of the target plate TPL, presses the joystick 586.

By moving the center CDp to coincide with the position of the target plate TPL through the operation of the joystick 586 and pressing the joystick 586, the first positional deviation amount x2 and the second positional deviation amount y2 on the captured image PT2 are measured and input to the controller 40.

However, the first positional deviation amount x2 and the second positional deviation amount y2 may also be automatically acquired by the information processing unit 42 when the controller 40 draws the center CDp, and input to the information storage unit 41. The first deviation amount x2 and the second deviation amount y2 input to the controller 40 can be displayed on the captured image PT2.

In the second optical axis deviation amount measurement mode as well, for example, it is possible to change the display magnification of the captured image PT2 by digital zoom through operating the zoom button 585 of the switch operating device 58.

The controller 40 calculates an optical axis deviation angle $\Psi_2$ of the lens 552 in the camera 55 based on the input first deviation amount x2 and the positional relationship between the camera 55 and the target plate TPL.

Specifically, based on the first positional deviation amount x2 on the captured image PT2 when the captured image PT2 is displayed in a manner that the target plate TPL is positioned on the extension line in the imaging direction PD of the camera 55, a first optical axis deviation amount Lx2 of the lens 552 at a position separated from the camera 55 by the distance H is calculated. Furthermore, by using the first optical axis deviation amount Lx2 and the distance H, the first optical axis deviation angle $\Psi_2$ of the lens 552 in the left-right direction is calculated by formula (1). It should be noted that in formula (1), i is a natural number, and when the first optical axis deviation angle $\Psi_2$ is calculated, i = 2 is satisfied.

Further, the controller 40 calculates an optical axis deviation angle $\theta_2$ of the lens 552 in the camera 55 based on the input second deviation amount y2 and the positional relationship between the camera 55 and the target plate TPL.

Specifically, based on the second positional deviation amount y2 on the captured image PT2 when the captured image PT2 is displayed in a manner that the target plate TPL is positioned on the extension line in the imaging direction PD of the camera 55, a second optical axis deviation amount Ly2 of the lens 552 at a position separated from the camera 55 by the distance H is calculated. Furthermore, by using the second optical axis deviation amount Ly2 and the distance H, the second optical axis deviation angle $\theta_2$ of the lens 552 in the up-down direction is calculated by formula (2). It should be noted that in formula (2), i is a natural number, and when the second optical axis deviation angle $\theta_2$ is calculated, i = 2 is satisfied.

In the second optical axis deviation amount measurement mode, the operator operates the joystick 586 to move the center CDp to coincide with the position of the target plate TPL, and after pressing the joystick 586, presses the third preset button 584 of the switch operating device 58. When the third preset button 584 is pressed, the controller 40 shifts to a third optical axis deviation amount measurement mode. However, after the input of the first positional deviation amount x2 and the second positional deviation amount y2 to the controller 40 in the second optical axis deviation amount measurement mode has been completed, the controller 40 may also automatically shift to the third optical axis deviation amount measurement mode.

In the third optical axis deviation amount measurement mode, the controller 40 sets the capturing magnification zi of the image in the camera 55 to a predetermined capturing magnification set in advance, and captures an image including the target plate TPL by the camera 55. In this case, the capturing magnification zi set in the third optical axis deviation amount measurement mode is set to a capturing magnification z3, which is different from the capturing magnifications z1, z2. In the present embodiment, the capturing magnification z3 is set to a magnification larger than the capturing magnification z2. Further, the captured image PT captured in the third optical axis deviation amount measurement mode is a captured image PT3. The controller 40 can display, on the captured image PT3, the capturing magnification z3 of the image at the time when the captured image PT3 is captured.

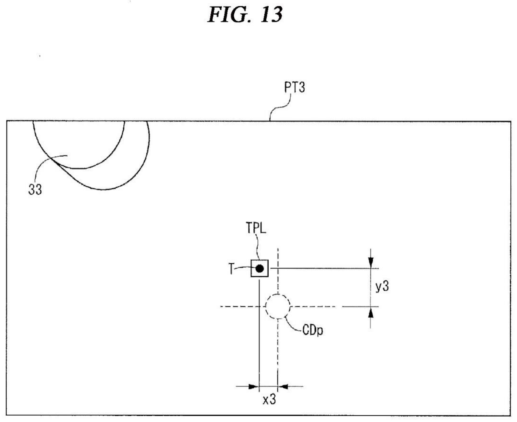

As illustrated in Fig. 13, the controller 40 draws the center CDp of the danger zone circle CD on the captured image PT3. The center CDp of the danger zone circle CD drawn on the captured image PT3 is a mark indicating the position of the optical axis OA of the lens 552 in the captured image PT3. It should be noted that, in the captured image PT3, only the center CDp is drawn without drawing the danger zone circle CD itself, but it is also possible to draw the danger zone circle CD in addition to the center CDp.

In the captured image PT3, the position of the target plate TPL and the position of the center CDp are deviated from each other. The positional deviation amount in the left-right direction between the position of the target plate TPL and the position of the center CDp in the captured image PT3 is a first positional deviation amount x3, and the positional deviation amount in the up-down direction between the position of the target plate TPL and the position of the center CDp in the captured image PT3 is a second positional deviation amount y3.

The center CDp drawn on the captured image PT3 can be moved by operating the joystick 586 of the switch operating device 58. The operator operates the joystick 586 to move the center CDp to the target plate TPL, and after making the position of the center CDp coincide with the position of the target plate TPL, presses the joystick 586.

By moving the center CDp to coincide with the position of the target plate TPL through the operation of the joystick 586 and pressing the joystick 586, the first positional deviation amount x3 and the second positional deviation amount y3 on the captured image PT3 are measured and input to the controller 40.

However, the first positional deviation amount x3 and the second positional deviation amount y3 may also be automatically acquired by the information processing unit 42 when the controller 40 draws the center CDp, and input to the information storage unit 41. The first deviation amount x3 and the second deviation amount y3 input to the controller 40 can be displayed on the captured image PT3.

In the third optical axis deviation amount measurement mode as well, for example, it is possible to change the display magnification of the captured image PT3 by digital zoom through operating the zoom button 585 of the switch operating device 58.

The controller 40 calculates an optical axis deviation angle $\Psi_3$ of the lens 552 in the camera 55 based on the input first deviation amount x3 and the positional relationship between the camera 55 and the target plate TPL.

Specifically, based on the first positional deviation amount x3 on the captured image PT3 when the captured image PT3 is displayed in a manner that the target plate TPL is positioned on the extension line in the imaging direction PD of the camera 55, a first optical axis deviation amount Lx3 of the lens 552 at a position separated from the camera 55 by the distance H is calculated. Furthermore, by using the first optical axis deviation amount Lx3 and the distance H, the first optical axis deviation angle $\Psi_3$ of the lens 552 in the left-right direction is calculated by formula (1). It should be noted that in formula (1), i is a natural number, and when the first optical axis deviation angle $\Psi_3$ is calculated, i = 3 is satisfied.

Further, the controller 40 calculates an optical axis deviation angle $\theta_3$ of the lens 552 in the camera 55 based on the input second deviation amount y3 and the positional relationship between the camera 55 and the target plate TPL.

Specifically, based on the second positional deviation amount y3 on the captured image PT2 when the captured image PT3 is displayed in a manner that the target plate TPL is positioned on the extension line in the imaging direction PD of the camera 55, a second optical axis deviation amount Ly3 of the lens 552 at a position separated from the camera 55 by the distance H is calculated. Furthermore, by using the second optical axis deviation amount Ly3 and the distance H, the second optical axis deviation angle $\theta_3$ of the lens 552 in the up-down direction is calculated by formula (2). It should be noted that in formula (2), i is a natural number, and when the second optical axis deviation angle $\theta_3$ is calculated, i = 3 is satisfied.

It should be noted that the controller 40 can calculate the first optical axis deviation angles $\Psi_1$, $\Psi_2$, $\Psi_3$ and the second optical axis deviation angles $\theta_1$, $\theta_2$, $\theta_3$ corresponding to each optical axis deviation amount measurement mode at the timing when the first positional deviation amount xi and the second positional deviation amount yi are input to the controller 40 respectively in the first, second, and third optical axis deviation amount measurement modes. Further, the controller 40 may also calculate all of the first optical axis deviation angles $\Psi_1$, $\Psi_2$, $\Psi_3$ and the second optical axis deviation angles $\theta_1$, $\theta_2$, $\theta_3$ after the first positional deviation amount xi and the second positional deviation amount yi are input to the controller 40 in the third optical axis deviation amount measurement mode after the first optical axis deviation amount measurement mode and the second optical axis deviation amount measurement mode have been executed.

The controller 40, after calculating the first optical axis deviation angles $\Psi_1$, $\Psi_2$, $\Psi_3$ and the second optical axis deviation angles $\theta_1$, $\theta_2$, $\theta_3$ respectively for the captured images PT1, PT2, PT3 captured at the respective capturing magnifications z1, z2, z3, corrects the position of the center CDp of the danger zone circle CD to be drawn on the captured image PT based on the calculated first optical axis deviation angles $\Psi_1$, $\Psi_2$, $\Psi_3$ and the calculated second optical axis deviation angles $\theta_1$, $\theta_2$, $\theta_3$.

Specifically, the controller 40 substitutes the calculated first optical axis deviation angle $\Psi_1$ and the capturing magnification z1 corresponding to the first optical axis deviation angle $\Psi_1$, the calculated first optical axis deviation angle $\Psi_2$ and the capturing magnification z2 corresponding to the first optical axis deviation angle $\Psi_2$, and the calculated first optical axis deviation angle $\Psi_3$ and the capturing magnification z3 corresponding to the first optical axis deviation angle $\Psi_3$, respectively, into formula (3).

[Formula 3]

$$\Psi i = \tan^{-1} \frac{k}{z i} + \Psi_0 \quad \cdots \quad (3)$$

It should be noted that in formula (3), i is a natural number, k is a first unknown, and $\Psi_0$ is a second unknown. The first unknown k is a component of an optical axis deviation angle that varies corresponding to the capturing magnification zi, and the second unknown $\Psi_0$ is a value indicating an optical axis deviation angle that is constant regardless of the capturing magnification zi.

Furthermore, the controller 40 substitutes the calculated second optical axis deviation angle $\theta_1$ and the capturing magnification z1 corresponding to the second optical axis deviation angle $\theta_1$, the calculated second optical axis deviation angle $\theta_2$ and the capturing magnification z2 corresponding to the second optical axis deviation angle $\theta_2$, and the calculated second optical axis deviation angle $\theta_3$ and the capturing magnification z3 corresponding to the second optical axis deviation angle $\theta_3$, respectively, into formula (4).

[Formula 4]

$$\theta i = \tan^{-1} \frac{m}{z i} + \theta_0 \quad \cdots \quad (4)$$

It should be noted that in formula (4), i is a natural number, m is a third unknown, and $\theta_0$ is a fourth unknown. The third unknown m is a component of an optical axis deviation angle that varies corresponding to the capturing magnification zi, and the fourth unknown $\theta_0$ is a value indicating an optical axis deviation angle that is constant regardless of the capturing magnification zi.

The controller 40 obtains formula (5) by substituting the first optical axis deviation angle $\Psi_1$ and the capturing magnification z1 into formula (3), obtains formula (6) by substituting the first optical axis deviation angle $\Psi_2$ and the capturing magnification z2 into formula (3), and obtains formula (7) by substituting the first optical axis deviation angle $\Psi_3$ and the capturing magnification z3 into formula (3).

[Formula 5]

$$\Psi 1 = \tan^{-1} \frac{k}{z1} + \Psi_0 \quad \cdots \quad (5)$$

[Formula 6]

$$\Psi 2 = \tan^{-1} \frac{k}{z2} + \Psi_0 \quad \cdots \quad (6)$$

[Formula 7]

$$\Psi 3 = \tan^{-1} \frac{k}{z3} + \Psi_0 \quad \cdots \quad (7)$$

The controller 40 obtains the first unknown k and the second unknown $\Psi_0$ by the least squares method using formulas (5), (6), and (7), which are formula 3 corresponding to the mutually different capturing magnifications z1, z2, and z3. In this case, by obtaining the first unknown k and the second unknown $\Psi_0$ by the least squares method, the errors of the obtained first unknown k and the obtained second unknown $\Psi_0$ can be minimized.

After obtaining the first unknown k and the second unknown $\Psi_0$, the controller 40 can calculate a first optical axis deviation angle $\Psi_i$ corresponding to any capturing magnification zi by substituting the obtained first unknown k and the obtained second unknown $\Psi_0$ into formula (3). That is, the controller 40 can calculate the first optical axis deviation angle $\Psi_i$ corresponding to any substituted capturing magnification zi by further substituting any capturing magnification zi into formula (3) in which the obtained first unknown k and the obtained second unknown $\Psi_0$ are substituted.

Furthermore, the controller 40 obtains formula (8) by substituting the second optical axis deviation angle $\theta_1$ and the capturing magnification z1 into formula (4), obtains formula (9) by substituting the second optical axis deviation angle $\theta_2$ and the capturing magnification z2 into formula (4), and obtains formula (10) by substituting the second optical axis deviation angle $\theta_3$ and the capturing magnification z3 into formula (4).

[Formula 8]

$$\theta 1 = \tan^{-1} \frac{m}{z1} + \theta o \quad \cdots \quad (8)$$

[Formula 9]

$$\theta 2 = \tan^{-1} \frac{m}{z2} + \theta o \quad \cdots \quad (9)$$

[Formula 10]

$$\theta 3 = \tan^{-1} \frac{m}{z3} + \theta o \quad \cdots \quad (10)$$

Further, the controller 40 obtains the unknowns m and $\theta 0$ by the least squares method using formulas 8, 9, and 10, which are formula 4 corresponding to the mutually different capturing magnifications z1, z2, and z3. In this case, by obtaining the third unknown m and the fourth unknown $\theta_0$ by the least squares method, the errors of the obtained third unknown m and the obtained fourth unknown $\theta_0$ can be minimized.

After obtaining the third unknown m and the fourth unknown $\theta_0$, the controller 40 can calculate a second optical axis deviation angle $\theta_i$ corresponding to any capturing magnification zi by substituting the obtained third unknown m and the obtained fourth unknown $\theta_0$ into formula (4). That is, the controller 40 can calculate the second optical axis deviation angle $\theta_i$ corresponding to any substituted capturing magnification zi by further substituting any capturing magnification zi into formula (4) in which the obtained third unknown m and the obtained fourth unknown $\theta_0$ are substituted.

The controller 40, after obtaining the first unknown k, the second unknown $\Psi_0$, the third unknown m, and the fourth unknown $\theta_0$, when drawing the danger zone circle CD on the captured image PT captured at a predetermined capturing magnification zi, calculates the first optical axis deviation angle $\Psi_i$ and the second optical axis deviation angle $\theta_i$ corresponding to the capturing magnification zi of the displayed captured image PT by formula (3) in which the obtained first unknown k and the obtained second unknown $\Psi_0$ are substituted and formula (4) in which the obtained third unknown m and the obtained fourth unknown $\theta_0$ are substituted, and corrects the optical axis deviation angles $\Psi$, $\theta$ of the optical axis OA in the camera 55 using the calculated first optical axis deviation angle $\Psi_i$ and the calculated second optical axis deviation angle $\theta_i$.

In this case, the correction of the optical axis deviation angles $\Psi$, $\theta$ of the optical axis OA is performed by moving the optical axis OA, in the left-right direction of the captured image PT, to the side opposite to the direction in which the optical axis OA is deviated with respect to the imaging direction PD by the amount of the calculated first optical axis deviation angle $\Psi_i$, and in the up-down direction of the captured image PT, to the side opposite to the direction in which the optical axis OA is deviated with respect to the imaging direction PD by the amount of the calculated second optical axis deviation angle $\theta_i$. In this way, the controller 40 corrects the optical axis deviation angles $\Psi$, $\theta$ of the optical axis OA on the captured image PT.

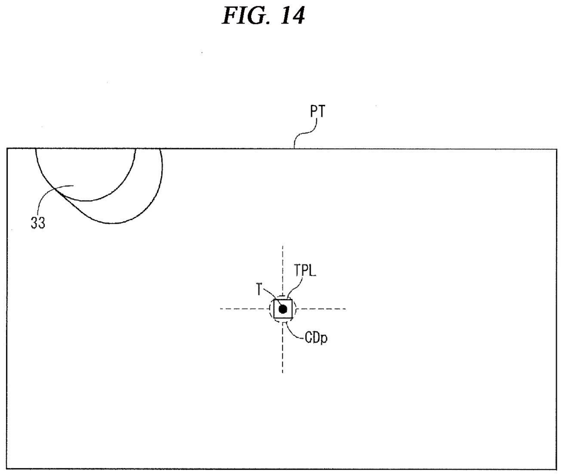

As illustrated in Fig. 14, when the danger zone circle CD is drawn on the captured image PT after the optical axis deviation angles $\Psi$, $\theta$ of the optical axis OA are corrected, the position of the center CDp of the danger zone circle CD and the position of the target plate TPL coincide with each other.

The controller 40 compares the position of the center CDp of the danger zone circle CD and the position of the target plate TPL, which are displayed on the captured image PT, and if the deviation amount between the position of the center CDp of the danger zone circle CD and the position of the target plate TPL is within a preset threshold range, determines that the position of the center CDp of the danger zone circle CD and the position of the target plate TPL coincide with each other, and terminates the optical axis deviation angle correction mode.

It should be noted that when the deviation amount between the position of the center CDp of the danger zone circle CD and the position of the target plate TPL exceeds a preset threshold range, it is possible that the correction of the optical axis deviation angles $\Psi$, $\theta$ has not been properly performed, and thus, the first optical axis deviation amount measurement mode, the second optical axis deviation amount measurement mode, and the third optical axis deviation amount measurement mode may be executed again to recalculate the first optical axis deviation angles $\Psi_1$, $\Psi_2$, $\Psi_3$ and the second optical axis deviation angles $\theta_1$, $\theta_2$, $\theta_3$, and correct the optical axis deviation angles $\Psi$, $\theta$ of the optical axis OA again.

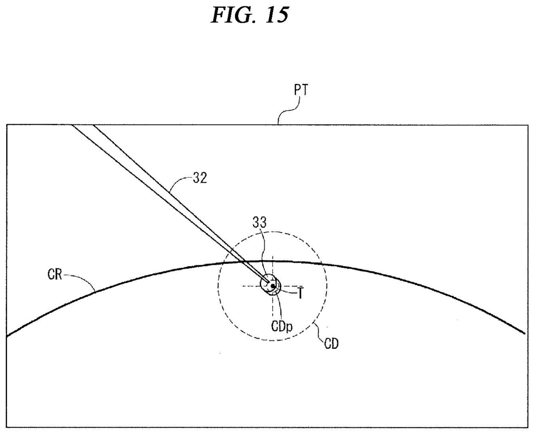

As illustrated in Fig. 15, after the correction of the optical axis deviation angles $\Psi$, $\theta$ of the optical axis OA, it is possible to draw the danger zone circle CD on the captured image PT captured at any capturing magnification zi at a position where the center CDp of the danger zone circle CD coincides with the contact point T of the hook 33, and to draw the performance line CR with high accuracy.

It should be noted that in the present embodiment, the first optical axis deviation angles $\Psi_1$, $\Psi_2$, $\Psi_3$ and the second optical axis deviation angles $\theta_1$, $\theta_2$, $\theta_3$ are calculated for the captured images PT1, PT2, PT3 captured at the three types of capturing magnifications z1, z2, and z3 to correct the optical axis deviation angles $\Psi$, $\theta$ of the optical axis OA. However, it is also possible to calculate the first optical axis deviation angle $\Psi_i$ and the

second optical axis deviation angle $\theta_i$ for the captured image PT captured at more than three types of capturing magnifications $z_i$ to correct the optical axis deviation angles $\Psi$, $\theta$ of the optical axis OA. By increasing the number of types of capturing magnifications $z_i$ of the captured image PT for calculating the first optical axis deviation angle $\Psi_i$ and the second optical axis deviation angle $\theta_i$, the correction accuracy of the optical axis deviation angles $\Psi$, $\theta$ can be improved.

As described above, in the optical axis deviation angle correction device 7 provided in the crane 1, the controller 40 draws the center CDp of the danger zone circle CD, which is a mark indicating the position of the optical axis OA of the lens 552, on the captured image PT. Further, the controller 40 calculates the optical axis deviation angles $\Psi$, $\theta$ of the lens 552 in the camera 55 by using the positional relationship between the camera 55 and the target plate TPL, and the first positional deviation amount $x_i$ and the second positional deviation amount $y_i$, based on the input of the first positional deviation amount $x_i$ and the second positional deviation amount $y_i$ between the center CDp of the danger zone circle CD and the target plate TPL indicating the contact point T of the hook 33, whose positional relationship with respect to the camera 55 is known, on the captured image PT. Moreover, the controller 40 corrects the position of the center CDp of the danger zone circle CD to be drawn on the captured image PT based on the calculated optical axis deviation angles $\Psi$, $\theta$.

In other words, in the optical axis deviation angle correction device 7, the optical axis deviation angles $\Psi$, $\theta$ of the lens 552 are calculated using the first positional deviation amount $x_i$ and the second positional deviation amount $y_i$ between the center CDp of the danger zone circle CD and the target plate TPL on the captured image PT to correct the position of the center CDp of the danger zone circle CD to be drawn on the captured image PT, and thus, the optical axis deviation angles $\Psi$, $\theta$ of the lens 552 in the camera 55 can be corrected by a simple and inexpensive configuration.

In this case, by correcting the optical axis deviation angles $\Psi$, $\theta$ of the lens 552 in the captured image PT in which an image including the hook 33 is captured, the performance line CR indicating a range of a predetermined moment load factor in the crane 1 and the danger zone circle CD can be drawn with high accuracy on the captured image PT.

In particular, the controller 40 of the optical axis deviation angle correction device 7 calculates, based on the first positional deviation amounts $x1$, $x2$, and $x3$ in the left-right direction between the target plate TPL and the center CDp of the danger zone circle CD on the captured image PT when the captured image PT is displayed in a manner that the target plate TPL is positioned on the extension line in the imaging direction PD of the camera 55, the first optical axis deviation amount $Lx_i$ ($Lx1$, $Lx2$, $Lx3$) of the lens 552 in the left-right direction. Further, the controller 40 calculates the first optical axis deviation

angle $\Psi_i$ of the lens 552 in the left-right direction by formula (1) using the first optical axis deviation amount $Lx_i$ and the distance H. In addition, the controller 40 calculates, based on the second positional deviation amounts $y1$, $y2$, and $y3$ in the up-down direction between the target plate TPL and the center CDp of the danger zone circle CD on the captured image PT, the second optical axis deviation amount $Ly_i$ ($Ly1$, $Ly2$, $Ly3$) of the lens 552 in the up-down direction. Then, the controller 40 calculates the second optical axis deviation angle $\theta_i$ of the lens 552 in the up-down direction by formula (2) using the second optical axis deviation amount $Ly_i$ and the distance H.

In this way, in the optical axis deviation angle correction device 7, the first optical axis deviation angle $\Psi_i$ in the left-right direction and the second optical axis deviation angle $\theta_i$ in the up-down direction are calculated as the optical axis deviation angles $\Psi$, $\theta$ of the lens 552, and thus, the correction of the optical axis deviation angles $\Psi$, $\theta$ can be performed with high accuracy.

Further, the controller 40 of the optical axis deviation angle correction device 7 calculates the first optical axis deviation angles $\Psi_i$ respectively for the captured images PT captured at three or more types of capturing magnifications $z_i$. The controller 40 also substitutes the calculated first optical axis deviation angles $\Psi_i$ and the capturing magnifications $z_i$ corresponding to the first optical axis deviation angles $\Psi_i$ into formula (3) to obtain the first unknown $k$ and the second unknown $\Psi_0$ in formula (3) by the least squares method using formula (3) corresponding to the three or more types of capturing magnifications $z_i$. In addition, the controller 40 calculates the second optical axis deviation angles $\theta_i$ respectively for the captured images PT captured at the three or more types of capturing magnifications $z_i$. The controller 40 also substitutes the calculated second optical axis deviation angles $\theta_i$ and the capturing magnifications $z_i$ corresponding to the second optical axis deviation angles $\theta_i$ into formula (4) to obtain the third unknown $m$ and the fourth unknown $\theta_0$ in formula (4) by the least squares method using formula (4) corresponding to the three or more types of capturing magnifications $z_i$.

As a result, the errors of the obtained first unknown $k$, second unknown $\Psi_0$, third unknown $m$, and fourth unknown $\theta_0$ can be minimized.

Further, the controller 40 of the optical axis deviation angle correction device 7 calculates the first optical axis deviation angle $\Psi_i$ corresponding to any substituted capturing magnification $z_i$ by substituting the obtained first unknown $k$, the obtained second unknown $\Psi_0$, and any capturing magnification $z_i$ into formula (3). The controller 40 also calculates the second optical axis deviation angle $\theta_i$ corresponding to any substituted capturing magnification $z_i$ by substituting the obtained third unknown $m$, the obtained fourth unknown $\theta_0$, and any capturing magnification $z_i$ into formula (4).

As a result, the first optical axis deviation angle $\Psi_i$ and the second optical axis deviation angle $\theta_i$ corre-

sponding to any capturing magnification zi can be calculated with high accuracy.

Further, by correcting the optical axis deviation angles $\Psi$, $\theta$ of the lens 552 by the optical axis deviation angle correction device 7 to make the contact point T of the hook 33 coincide with the center CDp of the danger zone circle CD on the captured image PT, the drawing accuracy of the danger zone circle CD is improved. Therefore, the position where the hook 33 descends and the position where the cargo W suspended from the hook 33 falls can be grasped more accurately. As a result, accurate warnings can be given to workers around the crane 1, thereby further improving safety.

Further, since the controller 40 can change the display radius of the danger zone circle CD, the display radius of the danger zone circle CD can be changed according to the size of the suspended load.

In addition, although the commercially available camera 55 has variations in the axial direction of the optical axis OA, by performing correction of the optical axis deviation angles $\Psi$, $\theta$ by the optical axis deviation angle correction device 7, even when the commercially available camera 55 is used, the performance line CR and the danger zone circle CD can be drawn with high accuracy on the captured image PT.

Further, by attaching the camera 55 to the boom 31 of the crane 1 and providing the optical axis deviation angle correction device 7 in the crane 1, and by using the hook 33 or the contact point T of the hook 33 as a target whose positional relationship with respect to the camera 55 is known, the optical axis deviation angles $\Psi$, $\theta$ can be measured at a low cost and in a short time.

In the present embodiment, various operations in the optical axis deviation angle correction mode are performed by operating the switch operating device 58, but the operations may also be performed by operating on the display 65 configured as a touch panel.

Further, since the controller 40 can display the capturing magnification zi of the camera 55 on the captured image PT1 in each optical axis deviation amount measurement mode, it is easy to detect a malfunction of the zoom function in the camera 55.

In addition, in the present embodiment, the danger zone circle CD is drawn at a height with reference to the ground S, but the danger zone circle CD may also be drawn at any height position of the hook 33. When the danger zone circle CD is drawn at the height position of the hook 33, the danger zone circle CD can be displayed even at high places such as the rooftop of a building, and thus, the danger zone circle CD can be used for positioning during unloading of the cargo W.

Further, by predicting the trajectory along which the cargo W moves from the position of the danger zone circle CD and drawing it on the captured image PT1, it is possible to check whether there are people or obstacles at the destination of the cargo W. Furthermore, by adding a sensor capable of detecting people or obstacles to the crane 1, it is also possible to detect that people or obstacles are present within the region of the danger zone circle CD and to notify that people or obstacles have entered the danger zone.

The disclosure of the description, drawings, and abstract contained in Japanese Patent Application No. 2023-82537 filed on May 18, 2023 is entirely incorporated herein by reference.

Industrial Applicability

The present invention can be applied to various cranes.

Reference Signs List

| | |
|---|---|
| 1 | Crane |
| 4 | Operating system |
| 7 | Optical axis deviation angle correction device |
| 31 | Boom |
| 32 | Wire rope |
| 33 | Hook |
| 40 | Controller |
| 55 | Camera |
| 552 | Lens |
| CD | Danger zone circle |
| CDp | Center of danger zone circle |
| H | Distance |
| k | First unknown |
| Lxi | First optical axis deviation amount |
| Lyi | Second optical axis deviation amount |
| m | Third unknown |
| OA | Optical axis |
| PD | Imaging direction |
| PT | Captured image |
| T | Contact point |
| Tg | Target |
| TPL | Target plate |
| xi | First positional deviation amount |
| yi | Second positional deviation amount |
| zi | Capturing magnification |
| $\Psi$, $\theta$ | Optical axis deviation angles |
| $\Psi_0$ | Second unknown |
| $\Psi_i$ | First optical axis deviation angle |
| $\theta_0$ | Fourth unknown |
| $\theta_i$ | Second optical axis deviation angle |
| W | Cargo |

**Claims**

1. An optical axis deviation angle correction device comprising:

    a camera that has a lens and captures an image including a target whose position is known; and a controller that draws a mark indicating a position of an optical axis of the lens on a captured image of the camera, calculates a deviation angle of an optical axis of the lens with respect to an imaging direction of the camera based on a positional relationship between the mark and the target in the captured image, and corrects a position of the mark in a manner that the mark in the captured image overlaps with the target based on the deviation angle of the optical axis.

2. The optical axis deviation angle correction device according to claim 1, wherein
the controller calculates the deviation angle of the optical axis based on a positional deviation amount between the mark and the target in the captured image and a positional relationship between the camera and the target.

3. The optical axis deviation angle correction device according to claim 2, wherein
the controller

calculates a first optical axis deviation amount Lxi of the lens with respect to the target in a first direction at a position separated from the camera by a distance H from a center of the lens to the target in the imaging direction of the camera, based on a first positional deviation amount in the first direction between the target and the mark on the captured image when the captured image is displayed in a manner that the target is positioned on an extension line in the imaging direction of the camera,
calculates a first optical axis deviation angle $\Psi_i$ of the lens in the first direction by formula (1) using the first optical axis deviation amount Lxi and the distance H,
calculates a second optical axis deviation amount Lyi of the lens with respect to the target in a second direction orthogonal to the first direction at a position separated from the camera by the distance H, based on a second positional deviation amount in the second direction between the target and the mark on the captured image when the captured image is displayed in a manner that the target is positioned on the extension line in the imaging direction of the camera, and
calculates a second optical axis deviation angle $\theta_i$ of the lens in the second direction by formula (2) using the second optical axis deviation amount Lyi and the distance H,
[Formula 1]

$$\Psi i = \tan^{-1}\frac{Lxi}{H} \quad \cdots \quad (1)$$

[Formula 2]

$$\theta i = \tan^{-1}\frac{Lyi}{H} \quad \cdots \quad (2)$$

4. The optical axis deviation angle correction device according to claim 3, wherein

the camera captures an image including the target at three or more types of capturing magnifications zi, and
the controller

calculates the first optical axis deviation angle $\Psi_i$ respectively for a captured image which is captured at each of the capturing magnifications zi, substitutes the first optical axis deviation angle $\Psi_i$ which is calculated and the capturing magnification zi corresponding to the first optical axis deviation angle $\Psi_i$ into formula (3) to obtain a first unknown k and a second unknown $\Psi_0$ in formula (3) by a least squares method using formula (3) corresponding to the three or more types of capturing magnifications zi, calculates the second optical axis deviation angle $\theta_i$ respectively for the captured image which is captured at each of the capturing magnifications zi, substitutes the second optical axis deviation angle $\theta_i$ which is calculated and the capturing magnification zi corresponding to the second optical axis deviation angle $\theta_i$ into formula (4) to obtain a third unknown m and a fourth unknown $\theta_0$ in formula (4) by the least squares method using formula (4) corresponding to the three or more types of capturing magnifications zi,
[Formula 3]

$$\Psi i = \tan^{-1}\frac{k}{zi} + \Psi 0 \quad \cdots \quad (3)$$

[Formula 4]

$$\theta i = \tan^{-1}\frac{m}{zi} + \theta 0 \quad \cdots \quad (4)$$

5. The optical axis deviation angle correction device according to claim 4, wherein
the controller,

by substituting the first unknown k and the second unknown $\Psi_0$ which have been obtained and any of the capturing magnifications zi into formula (3), calculates the first optical axis deviation angle $\Psi_i$ corresponding to any of the capturing magnifications zi which has been substituted, and

by substituting the third unknown m and the fourth unknown $\theta_0$ which have been obtained and any of the capturing magnifications zi into formula (4), calculates the second optical axis deviation angle $\theta_i$ corresponding to any of the capturing magnifications zi which has been substituted.

6. A crane comprising the optical axis deviation angle correction device according to claim 1.

7. The crane according to claim 6, further comprising:

a hook that is supported by a wire rope suspended from a boom, wherein
the camera of the optical axis deviation angle correction device is provided on the boom, and the target is the hook.

8. The crane according to claim 7, wherein

the controller of the optical axis deviation angle correction device
stores a positional relationship of the hook with respect to the camera,
draws a mark indicating an optical axis position of the lens on a captured image of the camera,
measures a positional deviation amount between the mark and the hook on the captured image,
calculates a deviation angle of the optical axis of the lens in the camera by using the positional relationship and the positional deviation amount between the camera and the hook, and
corrects a position of the mark drawn on the captured image based on the deviation angle of the optical axis which has been calculated.

9. The crane according to claim 8, wherein the controller draws a danger zone circle, which indicates a ground region where a load suspended from the hook lands when the load falls vertically, at a position where a center of the danger zone circle coincides with the optical axis position of the lens.

10. An optical axis deviation angle correction method comprising:

capturing an image including a target whose position is known by a camera having a lens;
drawing a mark indicating a position of an optical axis of the lens on a captured image of the camera,
calculating a deviation angle of an optical axis of the lens with respect to an imaging direction of the camera based on a positional relationship between the mark and the target in the captured image, and

correcting a position of the mark in a manner that the mark in the captured image overlaps with the target based on the deviation angle of the optical axis.

11. The optical axis deviation angle correction method according to claim 10, wherein
in calculating the deviation angle of the optical axis, a positional deviation amount between the mark and the target on the captured image is measured as the positional relationship between the mark and the target, and the deviation angle of the optical axis is calculated by using a positional relationship between the camera and the target and the positional deviation amount.

FIG. 1

FIG. 2

## FIG. 3

4

45 OVERLOAD PREVENTION DEVICE

40

51 SLEWING LEVER

52 TELESCOPIC LEVER

53 LUFFING LEVER

54 WINDING LEVER

91 SLEWING ANGLE DETECTION SENSOR

92 BOOM LENGTH DETECTION SENSOR

93 BOOM ANGLE DETECTION SENSOR

94 LUFFING CYLINDER PRESSURE DETECTION SENSOR

95 LEVER OPERATION DETECTION SENSOR

96 OUTRIGGER EXTENSION WIDTH DETECTION SENSOR

CONTROLLER

41 INFORMATION STORAGE UNIT

42 INFORMATION PROCESSING UNIT

61 SLEWING VALVE

62 TELESCOPIC VALVE

63 LUFFING VALVE

64 WINDING VALVE

58 SWITCH OPERATING DEVICE

RECEIVER

65 DISPLAY

43

7

55 CAMERA

56 INCLINATION ANGLE DETECTOR

**FIG. 4**

## FIG. 5

*FIG. 6*

FIG. 7A

( a )

FIG. 7B

( b )

*FIG. 8*

*FIG. 9*

# FIG. 10

*FIG. 11*

**FIG. 12**

## FIG. 13

## FIG. 14

FIG. 15

## INTERNATIONAL SEARCH REPORT

| International application No. |
| --- |
| **PCT/JP2024/018385** |

**A. CLASSIFICATION OF SUBJECT MATTER**

*H04N 23/63*(2023.01)i; *B66C 13/00*(2006.01)i; *B66C 23/90*(2006.01)i; *H04N 7/18*(2006.01)i
FI: H04N23/63; B66C13/00 D; B66C23/90 F; B66C23/90 M; B66C23/90 P; H04N7/18 C

According to International Patent Classification (IPC) or to both national classification and IPC

**B. FIELDS SEARCHED**

Minimum documentation searched (classification system followed by classification symbols)

H04N23/63; B66C13/00; B66C23/90; H04N7/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2009-302764 A (CANON KABUSHIKI KAISHA) 24 December 2009 (2009-12-24) paragraphs [0015]-[0018], fig. 7 | 1-11 |
| A | JP 2014-131121 A (HITACHI MAXELL LTD.) 10 July 2014 (2014-07-10) paragraph [0084], fig. 25 | 1-11 |
| A | JP 2011-71604 A (FUJIFILM CORPORATION) 07 April 2011 (2011-04-07) paragraphs [0055]-[0059] | 1-11 |
| A | JP 2002-74339 A (HITACHI, LTD.) 15 March 2002 (2002-03-15) entire text, all drawings | 1-11 |

☐ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 June 2024** | **25 June 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/018385**

| Patent document cited in search report | | | Publication date (day/month/year) | Patent family member(s) | Publication date (day/month/year) |
|---|---|---|---|---|---|
| JP | 2009-302764 | A | 24 December 2009 | (Family: none) | |
| JP | 2014-131121 | A | 10 July 2014 | (Family: none) | |
| JP | 2011-71604 | A | 07 April 2011 | US 2011/0069151 A1 paragraphs [0069]-[0073] | |
| JP | 2002-74339 | A | 15 March 2002 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008311804 A

- JP 2023082537 A